(19)

Europäisches Patentamt
European Patent Office
Office européen des brevets

(11) **EP 4 098 338 A1**

(12) **EUROPEAN PATENT APPLICATION**

(43) Date of publication:
**07.12.2022 Bulletin 2022/49**

(21) Application number: **21176915.3**

(22) Date of filing: **31.05.2021**

(51) International Patent Classification (IPC):
**B01D 1/00** (2006.01) **B01D 1/28** (2006.01)
**B01D 1/30** (2006.01) **B01D 3/00** (2006.01)
**B01D 3/10** (2006.01) **B01D 5/00** (2006.01)
**C02F 1/04** (2006.01) **F25B 30/02** (2006.01)
**F25B 39/02** (2006.01) **F25C 1/16** (2006.01)

(52) Cooperative Patent Classification (CPC):
**F25B 19/00; B01B 1/005; C02F 1/041; F25B 39/02;**
C02F 1/048

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **STAC Technology ApS**
**2900 Hellerup (DK)**

(72) Inventors:
- **SØRENSEN, Henrik, Schiøtt**
  **3650 Ølstykke (DK)**
- **MINDS, Gunnar, Thrane**
  **8240 Riskov (DK)**
- **CHRISTOFFERSEN, Poul Bohn**
  **2450 Copenhagen (DK)**

(74) Representative: **Patrade A/S**
**Ceresbyen 75**
**8000 Aarhus C (DK)**

(54) **EVAPORATOR AND COOLING DEVICE**

(57) Disclosed is an evaporator and a system comprising an evaporator comprising an evaporator compartment with a suction port and an inlet port wherein the inlet port is adapted to supply a liquid refrigerant into the evaporator compartment for being evaporated to form vapor, and wherein the suction port is adapted to be coupled to a compressor generating a low pressure at the suction port such that the vapor is sucked out through the suction port.

**Fig. 1**

**Description**

The present disclosure relates to an evaporator and a cooling device and/or other devices functioning by vaporizing a refrigerant, e.g. in a desalination process or in a heat pump.

BACKGROUND

Various kinds of conventional cooling devices such as refrigerators and ice makers for generating cold water and ice have been known (e.g. refer to EP 2 224 190 A1). In such cooling devices, an evaporator leads to a condenser via a compressor. In the evaporator, water is generated in a droplet or misty state as a refrigerant. Pressure in the evaporator is reduced by a suction effect of the compressor, so that part of the droplet or misty refrigerant is evaporated. The refrigerant is cooled down by evaporation heat obtained at this time. Evaporated refrigerant vapor is sucked out and compressed by the compressor. The compressed refrigerant vapor is sent to a condenser wherein it is condensed.

SUMMARY

It is an object of the present disclosure to at least solve or remedy some of the disadvantages of the known solutions, or to at least provide advantages of the known solutions. Particularly, the present disclosure provides techniques for reducing wear and tear of a compressor in a system, such as the disclosed, by reducing the risk of droplets entering such compressor.

Thus, the present disclosure relates to an evaporator and a system comprising such an evaporator. The disclosed system may constitute a cooling device, a desalination system, a heat pump, or any combination thereof.

Accordingly, an evaporator is disclosed. The evaporator comprises an evaporator compartment with a suction port, an inlet port, and an outlet port.

The inlet port is adapted to supply a liquid refrigerant into the evaporator compartment for being partly evaporated to form vapor. The suction port is adapted to be coupled to a compressor generating a low pressure at the suction port such that the vapor is sucked out through the suction port. The outlet port is for liquid refrigerant from within the evaporator compartment to exit through the outlet port.

The liquid refrigerant may be water, such as non-purified water, e.g. saline water or waste-water. The vapor sucked out through the suction port may be water vapor, e.g. to be provided as purified water. Thus, the evaporator may be used to provide purified water from non-purified water, such as saline water or waste-water. In situations where the evaporator is used for providing purified water, it may be an important advantage to limit or eliminate carriage of droplets through the suction port, as droplets may carry particles such as salt or waste, potentially compromising the purification.

The liquid refrigerant being supplied to the evaporator by the inlet port may be at a first temperature. The liquid refrigerant exiting through the outlet port may be at a second temperature. The first temperature may be higher than the second temperature. The second temperature may be lower than the first temperature due to the evaporation of liquid refrigerant in the evaporation compartment drawing energy, i.e. heat, from the surrounding liquid refrigerant.

The evaporator comprises one or more droplet reducing measures to reduce or eliminate droplets entering the suction port.

For example, the evaporator comprises a flow aperture between the inlet port and the suction port. The flow aperture has an opening area which is larger than an opening threshold area. The opening threshold area is such that a flow speed through the flow aperture is below an escape velocity speed needed to carry droplets or mist. For example, the opening threshold area is based on the compressor flow of the compressor and/or the vapor pressure difference between the liquid refrigerant supplied from the inlet port and liquid refrigerant exiting through the outlet port. The flow aperture may be in a horizontal plane.

Alternatively or additionally, the inlet port may be adapted for an inflow feed of the liquid refrigerant such that the liquid refrigerant flows within the evaporator compartment with laminar flow, such as with a Reynolds number below 2000.

Alternatively or additionally, the evaporator may comprise a filter between the inlet port and the suction port. The filter may divide the evaporator compartment into a first evaporator compartment for evaporating the liquid refrigerant and a second evaporator compartment for communicating with the suction port. The filter may transmit therethrough the vapor while capturing droplets of the liquid refrigerant. The filter may remove any droplets and/or particles carried along by the vapor stream. The filter may be heated, e.g. to transfer heat to the solid particles or droplets until they eventually evaporates and is carried as pure vapor to the compressor through the suction port. Heating the filter may further reduce the risk of blockage of the filter due to ice formation, when operating at temperatures near the freezing point of the refrigerant.

In case of the evaporator having both the filter and the flow aperture with the opening area larger than the opening threshold area, the flow aperture may be between the inlet port and the filter and/or the filter may be between the flow aperture and the suction port.

It is an advantage of the present disclosure, that the risk of droplets entering into the compressor is reduced or potentially eliminated. Thus, the present disclosure provides for a solution, which reduces the wear of a compressor in a system comprising an evaporator according to the present disclosure.

Droplets or splashes passing through the suction port may collide with a moving blade of the compressor connected to the suction port, causing damages to the moving blade. Therefore, a problem arises with shortened service life of such a compressor. Droplets furthermore has the ability to carry solids or salts to the blade surface, which also acts to damage the compressor over time. Thus, the compressor might with time become unbalanced due to the random deposits, greatly reducing the overall efficiency and finally end in compressor breakdown. As applications may use water or water-based solutions as the refrigerant, droplets carryover may be significant. For example, in EP 3 670 853 A1 is shown an application using district heating water, which may contain different kinds of detergents not suitable to be passed through the compressor. Furthermore, in an exemplary case of using the disclosed method for desalination, vapor purity is paramount. Thus, reducing the possibility for droplets to carry solid particles through the system, the present disclosure aids to provide high purity of the vapor.

In some situations, it may be advantageous to lower the vapor pressure in the evaporator compartment. When doing so microscopy ice particles may begin to form. These particles may be travelling with droplets or by themselves towards the filter. Upon reaching the filter both the droplets and ice crystals may deposit and block the filter. This might eventually lead to compressor failure or apparatus break down. Thus, heating of the filter provides the advantage, that such problem is mitigated or potentially eliminated, providing a solution for lowering the vapor pressure in the evaporator compartment.

Heating of the filter may be achieved by an external heat source or an internal heat source. The filter may be electrically heated. As evaporation in the evaporation compartment occurs as a result of low pressure applied to evaporation compartment the temperature of the liquid refrigerant is lowered as is the vapor. When vapor with undesired droplets interact with a slightly heated filter it will immediately become superheated and unstable droplets vaporises. In the case of evaporation for an expander, the inlet temperature of the liquid refrigerant will in combination of low pressure evaporate into vapor. The vapor can then be superheated through a heat exchanger or filter removing any undesired droplets before entering the expander and being condensed afterwards in a condenser.

The evaporator may comprise an evaporation plate inside the evaporator compartment. The evaporator plate may be arranged such that liquid refrigerant supplied from the inlet port flows onto and along the evaporation plate, e.g. with laminar flow, such as with a Reynolds number below 2000. The inlet port may comprise a plurality of outflow holes distributed along a horizontal direction of the evaporation plate. The holes may be dimensioned to ensure laminar flow both out of the holes and along the plate. The evaporation plate may be tilted with respect to vertical. For example, the evaporation plate may be tilted such as to control the speed of flow along the plate, e.g. to ensure a proper thickness of the refrigerant layer. Alternatively or additionally, the thickness of the refrigerant layer on the evaporation plate may be controlled by the flow of refrigerant supplied from the inlet port. The thickness of the refrigerant layer on the evaporation plate may be at least a thickness needed to evaporate the liquid refrigerant, e.g. as defined by the Knudsen layer.

The flow aperture with the opening area larger than the opening threshold area may be between the evaporator plate and the suction port, such as between the evaporator plate and the filter.

The evaporator may comprise a reservoir inside the evaporator compartment. The outlet port may be arranged in the reservoir. The reservoir may be arranged such that liquid refrigerant supplied from the inlet port flows to the reservoir. The liquid refrigerant contained in the reservoir may form a layer of liquid refrigerant in the reservoir. The layer of liquid refrigerant in the reservoir may have a surface for evaporation of the liquid refrigerant. The layer of liquid refrigerant in the reservoir may have a thickness of at least a thickness needed to evaporate the liquid refrigerant defined by the Knudsen layer. The liquid refrigerant supplied from the inlet port may flow onto and along the evaporation plate and into the reservoir. The evaporation plate may be arranged above the reservoir. The evaporation plate may extend into the reservoir, e.g. into the layer of liquid refrigerant in the reservoir, e.g. such as to avoid or limit the amount of refrigerant falling from the evaporation plate and into the reservoir, which may potentially cause splashes and droplets inside the evaporation compartment.

The liquid refrigerant exiting through the outlet port may be a pumpable mixture of water and ice, so-called ice slurry.

Also disclosed is a system comprising the evaporator. The system may further comprise a compressor coupled to the suction port. The compressor generates a low pressure at the suction port. The compressor sucks vapor from the evaporation compartment out through the suction port. The compressor generating the low pressure by a compressor flow.

The system may comprise a condenser. A pressure port of the compressor, e.g. opposite the suction port of the compressor, may be coupled to the condenser, e.g. to provide pressurised vapor to the condenser. The vapor may be condensed to liquid refrigerant in the condenser.

The system may comprise a condenser line coupling the condenser with the evaporator compartment, such as to provide liquid refrigerant from the condenser to the evaporator compartment of the evaporator. The condenser may provide heat. For example, the condenser may be coupled to a heat exchanger. The liquid refrigerant may be cooled in the condenser, e.g. by heat exchanging with a heating device.

The system may comprise a cooling unit for cooling of an external medium. The cooling unit may, for example, be an air conditioner for cooling surrounding air. The system may comprise an outlet refrigerant line coupling the outlet port of the evaporator with the cooling unit for cooling the external medium by the liquid refrigerant provided through the refrigerant line. The system may comprise an inlet refrigerant line coupling the inlet port of the evaporator with the cooling unit, such as to supply liquid refrigerant from the cooling unit to the evaporator, e.g. after cooling the external medium.

The vapor sucked from the evaporation compartment may be provided as purified water. For example, the liquid refrigerant supplied to the evaporation compartment may be impure water, such as saline water or waste-water, by evaporation in the evaporator purified water may be obtained from the impure water, e.g. while cooling the impure water, which may be used in air conditioning or similar.

BRIEF DESCRIPTION OF THE FIGURES

Embodiments of the disclosure will be described in more detail in the following with regard to the accompanying figures. The figures show one way of implementing the present disclosure and are not to be construed as being limiting to other possible embodiments falling within the scope of the attached claim set.

Fig. 1 is a schematic diagram illustrating an exemplary system comprising an exemplary evaporator,

Fig. 2 is a schematic diagram illustrating a front view of an exemplary evaporator,

Fig. 3 is a schematic diagram illustrating an exemplary system comprising an exemplary evaporator,

Fig. 4 is a graph illustrating dependence between the flow aperture and cooling capacity,

Fig. 5 is a graph illustrating dependence between the flow aperture and incoming refrigerant temperature and ambient temperature, and

Fig. 6 is a graph illustrating dependence between the flow aperture and input and output temperature of the refrigerant.

DETAILED DESCRIPTION

Various exemplary embodiments and details are described hereinafter, with reference to the figures when relevant. It should be noted that the figures may or may not be drawn to scale and that elements of similar structures or functions are represented by like reference numerals throughout the figures. It should also be noted that the figures are only intended to facilitate the description of the embodiments. They are not intended as an exhaustive description of the invention or as a limitation on the scope of the invention. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

The present disclosure teaches techniques lowering the likelihood of droplets carried to the compressor in an evaporator, such as an evaporator in a heat exchange system or in a purification system. These considerations are backed by testing against multiple constraints from statistical physics and thermo dynamics.

Evaporation of a liquid occurs in the outermost layer of the liquid, which is defined as the Knudsen layer. In this region the molecules are in both liquid and gas phase. In the case of evaporating water at 7°C, the thickness of this layer is approximately 16 $\mu$m. The energy needed to evaporate can be withdrawn from the surrounding water and when considering this as a 1-dimensional problem the resulting minimum layer thickness needed is found to be 2mm. At this point it is important to notice if the maximum evaporation flow is surpassed. The flow is regulated by the Hertz-Knudsen speed. Continuing the above example, the maximum molecular flow is readily found, and the maximum mass flow derived to approximately 1.1 kg/s.

The formation of a droplet can be defined be the Kelvin equation. When the refrigerant enters the evaporator, the refrigerant is not in equilibrium and some of the refrigerant will evaporate. This process may result in droplet formation and the radius of these droplets is governed by the ratio between the internal and external pressure ($\Delta$P). Here is assumed the pressure of saturation as being inside the droplet. The higher the inlet temperature of the refrigerant the smaller the droplet is formed, as the droplet has more energy to form the droplet. Here is considered a system, where the inlet temperature ranges from 7.5 to 22 °C. This results in a radius ranging from 4.2 mm to 90 $\mu$m. Smaller droplets are unstable and will aim to grow larger. If we assume a clean internal atmosphere no particles are present to become nuclei for the small droplets. Thereby formation and growth of small droplets are very unlikely.

In order for the generated droplet to escape the surface the particle has to be lifted by the compressor flow. It is a particle in a free flow situation. $F_B$ is the buoyant force as some vapor volume is occupied by the particle. $F_g$ is the gravity force, and $F_D$ is the drag from the vapor flow pulling the particle. From this an expression for the escape velocity is found:

$$v_e = \sqrt{\frac{4\,g \cdot \left(\rho_l - \rho_g\right) \cdot d}{3 \cdot C_D \cdot \rho_g}}$$

$C_D$ is the drag coefficient (e.g. 0.47), $\rho_g$ and $\rho_l$ are density of vapor and liquid, respectively, g is gravitation, and *d* is the droplet diameter. It is noticeable that the smaller droplets are not stable due to the higher pressure, thus tend to fuse into larger ones, as may also be observed as the morning dews, which are formed from smaller droplets. Here they lack both a nucleus and the thermal energy to build up the higher internal pressure. When designing the evaporator it is desirable if any droplets formed does not escape and enter the compressor through the suction port.

The flow through to the compressor may pass through an opening with an area, which is related to the compressor flow $S_{com}$ (m³/s) and the escape velocity, $v_e$(m/s) as follows:

$$A_{min} = \frac{S_{com}}{v_e}$$

Assuming the suction port is of circular geometry the flow through to the compressor may pass through a diameter, which is related to the compressor flow $S_{com}$ (m³/s) and the escape velocity, $v_e$ (m/s) as follows:

$$D_{min} = \sqrt{\frac{S_{com}}{v_e \cdot \dfrac{\pi}{4}}}$$

Following the above example having a cooling capacity of 250 kW, when the refrigerant is water having an inlet temperature of 22 degrees and an outlet temperature at 7 degrees Celsius, the suction port can have a diameter of 1.3m, i.e. an opening area of 1.33 m². A smaller opening area, such as a circular opening with a smaller diameter, of the suction port may allow for droplets formed by the refrigerant, to enter the compressor.

This characteristic length D may be rearranged to illustrate the dependencies of the two critical parameters of compressor flow, $S_{com}$, and the vapor pressure difference of the incoming and outgoing refrigerant, Δp. In this case it is the evaporation pressure of the water.

$$D_{min} = S_{com}^{\frac{1}{2}} \cdot \Delta p^{\frac{1}{4}} \cdot K$$

K is based on the drag coefficient ($C_D$), density of vapor and liquid ($\rho_g$ and $\rho_l$), the gravitational acceleration (g), and the surface tension of water ($\gamma$):

$$K = \left(\frac{4}{\pi}\right)^{\frac{1}{2}} \cdot \left(\frac{3 \cdot C_D \cdot \rho_g}{16 \cdot g \cdot \left(\rho_l - \rho_g\right) \cdot \gamma}\right)^{\frac{1}{4}}$$

For all practical purposes K may be constant. For example, K may be a constant between 0.04-0.08, such as between 0.05-0.07, such as 0.05236 or 0,06955. The latter may be applicable when ice crystals are forming whereby the drag coefficient increases (the drag coefficient may be 0.4 for droplets and 1.4 for ice crystals).

In terms of area, the minimum area of the opening is:

$$A_{min} = S_{com} \cdot \Delta p^{\frac{1}{2}} \cdot C$$

Where C, like K is based on the drag coefficient ($C_D$), density of vapor and liquid ($\rho_g$ and $\rho_l$), the gravitational acceleration (g), and the surface tension of water ($\gamma$):

$$C = \left( \frac{3 \cdot C_D \cdot \rho_g}{16 \cdot g \cdot (\rho_l - \rho_g) \cdot \gamma} \right)^{\frac{1}{2}}$$

Like K, for all practical purposes C may be constant. For example, C may be a constant between 0.002 and 0.005, such as between 0.00215 and 0.00412, such as 0.00215 or 0.00380.

In the following table examples of $D_{min}$ is listed with practical values for an evaporator using water as refrigerant:

| $D_{min}$ [m] | Cooling capacity [kW] | $S_{com}$ [m³/s] | Water $T_{in}$ [°C] | Water $T_{out}$ [°C] | $\Delta p$ [Pa] |
|---|---|---|---|---|---|
| 0,499 | 250 | 15,35 | 7,5 | 7 | 35 |
| 0,864 | 750 | 46,04 | 7,5 | 7 | 35 |
| 0,998 | 1000 | 61,38 | 7,5 | 7 | 35 |
| 0,918 | 250 | 15,35 | 12 | 7 | 401 |
| 1,306 | 250 | 15,35 | 22 | 7 | 1643 |
| 1,820 | 250 | 34,37 | 5 | 0 | 396,5 |

It is seen that when producing ice slurry at 0°C, the amount of vapor to be removed drastically increases, hence a larger evaporation aperture is needed.

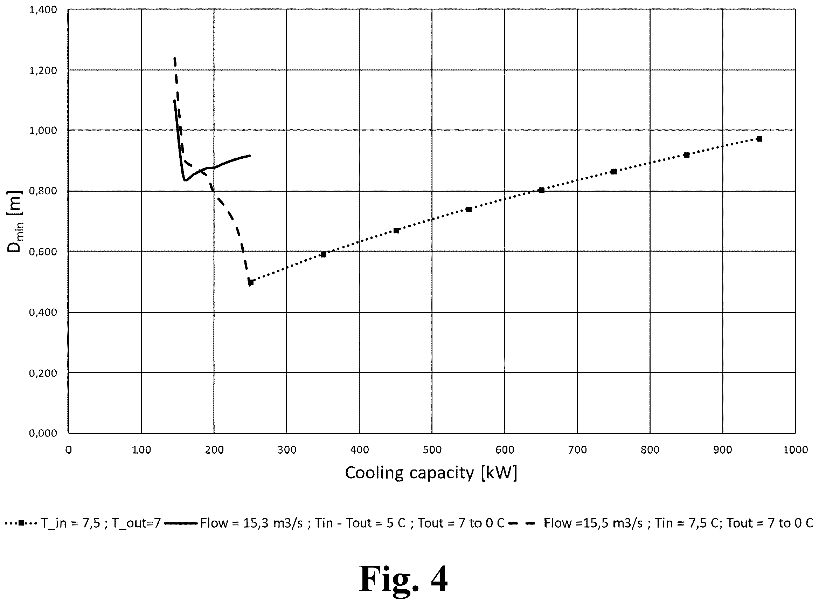

Figs. 4-6 show exemplary relationships between the minimum needed aperture size to prevent carriage of droplets and critical operational merits.

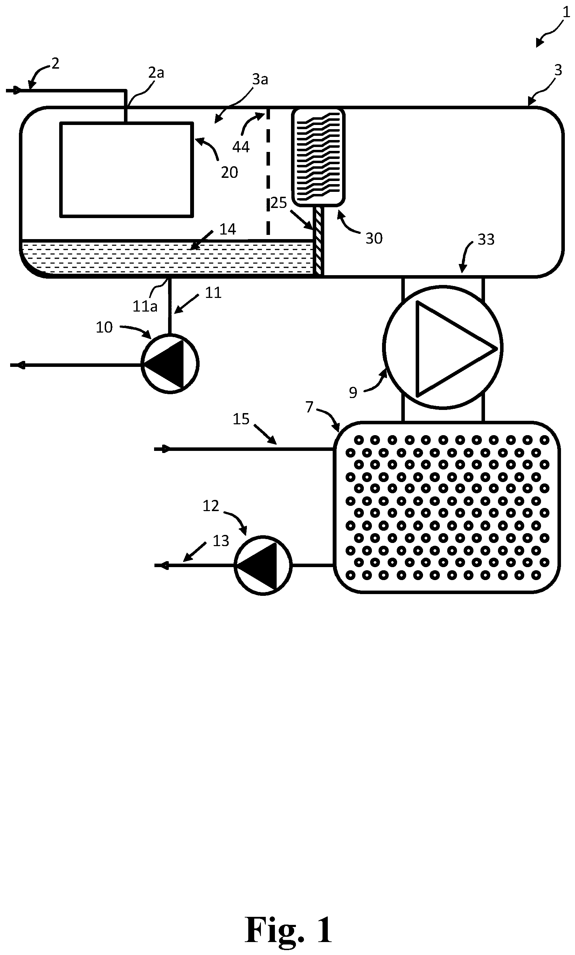

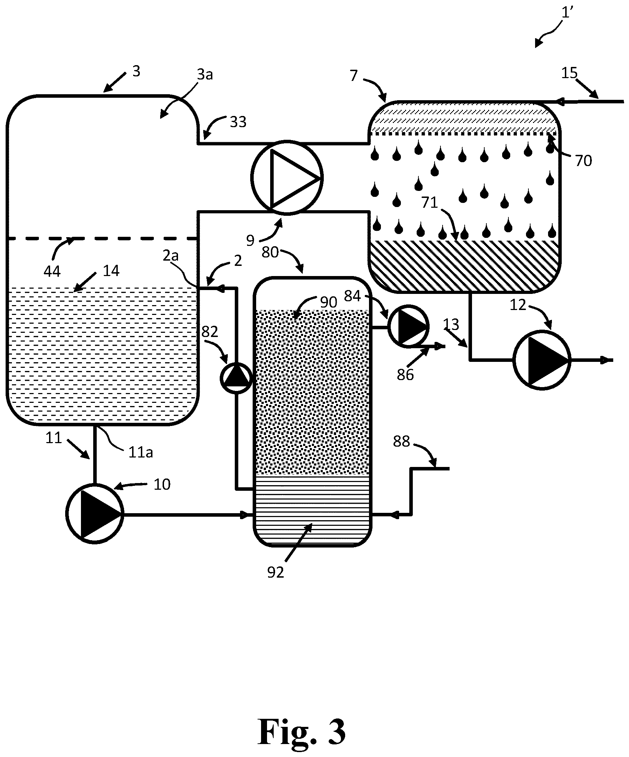

In Fig. 1, the designed area of the flow aperture between the inlet and the compressor is illustrated as a horizontal line 44, which ensures potential droplets are not carried by the vapor to the compressor. In some examples, the opening may be circular, having a diameter as explained above. However, it may be an arbitrary aperture through which the evaporated vapor has to pass at a certain speed as taught above. In some examples, the flow aperture may be a horizontal opening, as illustrated in Fig. 3, which reduces the risk of droplets being carried to the compressor when designing the aperture opening area as explained above.

In a practical implementation, the evaporator may be realised, as schematically illustrated in Fig 1, wherein the evaporator compartment 3a has a substantially circular cross sectional area between the inlet port and the suction port with a diameter larger than the threshold area, specified above as $D_{min}$.

Droplets may also be formed by splashing, turbulence and in some instances on purpose. For example, as shown in EP 2 224 190 A1, e.g. to maximize the surface to volume ratio in the evaporation phase, droplets may be introduced purposely in an evaporation compartment. Water will have a maximum evaporation rate corresponding to more than 2 MW/m² at 7 °C having droplets of more than 8mm in diameter. Using a shower-like design philosophy may in the extreme require such large droplet diameter for full evaporation that splashes on impact may be unavoidable and typical droplets formed by a shower setup is more than 3 orders of magnitude smaller. Hence, such solution might either result in less than optimal cooling capacity or in transfer of droplets to the suction port and potentially to the compressor. Thus, the present inventors have further found that an optimal configuration for an evaporator of may be to have the liquid refrigerant flow in a laminar flow from the inlet port, e.g. onto an evaporation plate and/or into a refrigerant reservoir while refrigerant is being evaporated.

Fig. 1 is a schematic diagram illustrating an exemplary system 1, such as a cooling system. For example, the system 1 may be connected to an air conditioner, where refrigerant, e.g. water, heated by heat exchange in the air conditioner is cooled down and supplied to the air conditioner again. The system 1 is provided with an evaporator 3, a compressor 9, and a condenser 7.

The inlet refrigerant feed 2 receives refrigerant, which may be received from cooling devices (not shown), such as air conditioners. Cold refrigerant from the evaporator may be transmitted to the cooling device via pump 10 through outlet port 11a and pipe 11 so as to supply the cold refrigerant to the cooling device (not shown).

Liquid refrigerant sent to inlet water feed 2 can be introduced to the evaporator 3. The evaporator 3 evaporates part of the liquid refrigerant as will be described later in order to cool down the remaining liquid refrigerant by the evaporation heat. The refrigerant may be water. The pump 10 may be connected to the evaporator 3, where cold liquid refrigerant which was cooled down may be supplied from the evaporator 3 to cooling surfaces by driving the first pump 10 through a pipe 11.

The compressor 9 can be connected between the evaporator 3 and the condenser 7. The evaporator 3 can be connected to a suction portion of the compressor 9, while the condenser 7 can be connected to a discharge portion of the compressor 9. The compressor 9 may have a moving blade and a stationary blade not shown, where vapor evaporated in the evaporator 3 can be sucked by driving the moving blade. The compressor 9 compresses sucked vapor so as to send to the condenser 7.

The condenser 7 cools down the vapor sent from the compressor 9 by using a coolant in order to condense the vapor. In some examples, the coolant may be the same as the previously described refrigerant, such as water. Alternatively, the coolant may be another liquid. In some examples, the coolant may be mixed with the previously described refrigerant (see, e.g. Fig. 3). In other examples, the coolant may be provided in a system separated from the system of the previously described refrigerant, which may allow heat exchange between the coolant and the refrigerant but keeping them separate.

The condenser 7 can be a heat exchanger of a direct heat exchange system, where the refrigerant vapor introduced into the condenser 7 may be condensed into the coolant, e.g. cooling water, so as to reheat the water. The coolant circulates around the condenser 7, e.g. by the second pump 12 through pipe 13. The coolant may be pumped to a cooling tower (not shown). That is, the coolant which was heated up by condensing the vapor in the condenser 7 can be sent from the condenser 7 to the cooling tower by driving the second pump 12. The cooling tower cools down received coolant, such as cooling water, which can be returned through a pipe 15 to low temperatures and supplies the coolant to the condenser 7. The condenser 7 condenses the vapor by coolant returned from the cooling tower. A series of these processes may be repeated in the condenser 7, the second pump 12 and/or the cooling tower.

The evaporator 3 evaporates part of the liquid refrigerant in order to cool down the liquid refrigerant by the evaporation heat as stated above.

Refrigerant, such as water, can be heated in the cooling device (not shown) via heat exchange and can be introduced in the evaporator 3 via piping 2. The refrigerant may be spread across an evaporation plate 20 of the evaporator 3. The refrigerant may be led onto the evaporation plates 20 in a constant flow, which may be inclined. The flow can be set to match the cooling capacity of the device and maintain laminar flow, such as having Reynolds numbers below 2000. While the refrigerant passes along the plate parts of the refrigerant evaporates into vapor. The thermal energy to evaporate refrigerant may be provided by the non-evaporated refrigerant which becomes colder. The non-evaporated liquid refrigerant can be accumulated in the tank reservoir 14. From the reservoir 14 the cold refrigerant can be pumped through piping 11 by pump 10 to the air conditioner (not shown).

At least part of the refrigerant may be evaporated by the work performed by the compressor 9 via suction port 33. The evaporated refrigerant, i.e. vapor, can be removed from the evaporator 3 by the suction of the compressor 9. The vapor may pass through an aperture 44 on the way towards the compressor 9. When the aperture 44 is sufficiently large the flow speed may be sufficiently low to not enable carriage of droplets and the vapor entering the compressor 9 may be droplet-free.

A filter 30 may be placed between the inlet port 2a and the suction port 33 so as to divide the evaporator compartment into a first evaporator compartment for evaporation of the liquid refrigerant and a second evaporator compartment for communicating with the suction port 33. The vapor may pass through a filter 30 before it reaches the suction port 33 entering the compressor 9. The filter 30 allows only the vapor to pass. The filter 30 may allow transmittal of vapor of the refrigerant therethrough and capture droplets, which may be made to flow downward. Thereby, vapor is exclusively transmitted through the filter 30 and sucked out from the suction port 33 in response to suction by the compressor 9.

The filter may be heated in order to slightly superheat the vapor, which increases the efficiency of the compressor 9 and further reduces the risk of droplets in the vapor entering the compressor 9. Also, heating the filter reduces the risk of ice formation blocking the filter.

The filter 30 may be heated internally, e.g. from using excess heat provided by the compressor 9 process. The exhaust of the compressor 9 may be directed towards the filter 30 prior to entering the condenser 7 or heat exchange between the exhaust of the compressor 9 and the filter may be effectuated in another manor. The filter 30 may also or alternatively be heated from an external source such as electrical heating. For a cooling apparatus, such as a cooling apparatus as suggested in EP 3 670 853 A1, where district heating can be the power source the return water may be a very well-suited thermal source for heating the filter 30. The temperature increase of the vapor from 7 °C to the typical 40 °C is plenty to superheat all vapor and entirely remove any formed droplets. An apparatus to provide cooling of ambient temperature could provide heat exchanged with the filter.

In some embodiments, the filter 30 may be omitted and prevention or reduction of droplets in the vapor may be provided entirely by the aperture 44 and/or the laminar flow conditions being maintained. Fig. 3 schematically illustrates such an exemplary evaporator 3, where a filter is not used.

After compression in the compressor 9 the vapor may be liquified in the condenser 7. Heat can be transferred by the cycled system comprising a pump 12 and pipeline 13 towards a cooling surface, such as a cooling tower, and return by the pipe 15.

The non-evaporated refrigerant in the evaporator 3 can be led off the evaporator plate into a refrigerant reservoir 14, from which cooled refrigerant can be pumped via the pump 10 through the pipe system 11 to a cooling device, such as an AC unit, and heated refrigerant from the cooling device may return in pipe 2 in a repeatable fashion. A separation wall 25 may retain the refrigerant in the reservoir 14 and avoid it flowing into the compressor 9.

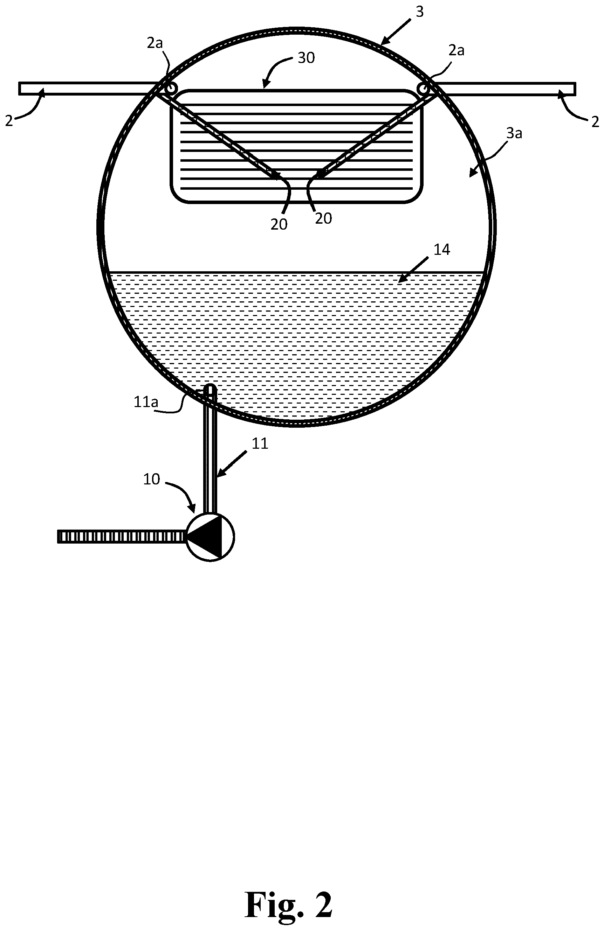

Fig. 2 is a schematic diagram illustrating a front view of an exemplary evaporator 3, such as the evaporator 3 as illustrated in Fig. 1. The liquid refrigerant is introduced through the pipe 2 and the inlet port 2a, as explained above. As illustrated, the evaporator 3 may comprise a plurality, such as two, inlet ports 2a, for supply of the liquid refrigerant. An evaporator plate 30 may be tilted so as to provide for a flow of the liquid refrigerant which results in a proper thickness of liquid refrigerant and time for optimal evaporation. The non-evaporated refrigerant may flow into the reservoir 14 before being pumped away by the pump 10 through the pipe 11. The non-evaporated refrigerant may be pumped from the evaporator 3 to a cooling unit, such as an A/C unit, to perform cooling. A filter 30, as explained in more detail above, may be placed above the liquid level of the refrigerant.

The inlet port may be adapted for an inflow feed of the liquid refrigerant such that the liquid refrigerant flows within the evaporator compartment, such as along the evaporation plate 20, with laminar flow, such as with a Reynolds number below 2000, or a Reynolds number below 1000, such as a Reynolds number below 600.

The liquid refrigerant may be distributed over the evaporation plate 20. For example, the inlet port(s) 2a may comprises a plurality of outflow holes distributed along a horizontal direction of the evaporation plate 20. The outflow holes may be dimensioned to ensure laminar flow both out of the holes and along the evaporation plate.

By ensuring laminar flow of the liquid refrigerant, the formation of droplets is minimized, resulting in a decreased risk of droplets entering into the compressor.

Fig. 3 is a schematic diagram illustrating an exemplary system 1 comprising an exemplary evaporator 3. The evaporator 3 of Fig. 3 is illustrated without the filter 30. Furthermore, the liquid refrigerant may be introduced via the pipe 2, through the inlet port 2a and evaporated from the refrigerant reservoir surface through the aperture 44 before entering the suction port 33 leading to the compressor 9. The cooled refrigerant in the reservoir 14 can be pumped by the pump 10 through piping 11 into an accumulation tank 80. In the case of ice slurry production, e.g. if the liquid refrigerant, when entering through the inlet port 2a and/or after cooling caused by evaporation of some of the refrigerant, is close to the freezing temperature of the refrigerant, the ice crystals will ascent from the cooled refrigerant media 92 into the ice slurry media 90. The concentrated ice slurry may be pumped by the pump 84 through the pipes 86 to perform cooling, e.g. in a cooling unit, such as an air conditioner. Afterwards, melted refrigerant may be returned to the tank 80 by pipe 88. From the cooled refrigerant 92 a portion may be pumped by a pump 82 back into the evaporator 3.

The compressed vapor may be entered into the condenser 7. In Fig. 3, the condenser 7 is illustrated as performing a direct condensation process, such as spray condensation, which may be performed with water being spray directly onto the hot vapor. Droplets and mist will aid in the formation of condensed vapor 71. By being liquified all the evaporation energy may be transferred to the condensation water, which results in heating of the condensation water. The combined liquified refrigerant 71 and water can be pumped by 12 through the pipe 13 to deliver its thermal energy. The cooled liquid can be returned by the pipe 15, so as the cycle may be continuously repeated. When the condenser 7 is of a type performing direct condensation, as illustrated in Fig. 3, the refrigerant may preferably also be water, as it is to be mixed with the cooling water.

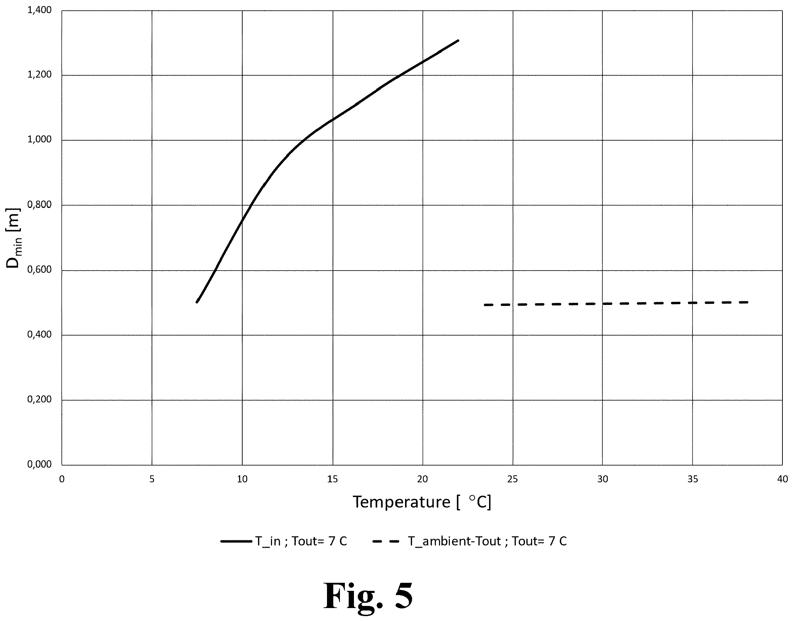

As described with respect to Figs. 1 and 2, the incoming flow through pipe 2 to the evaporator 3 can be guided onto a evaporation plate(s) 20, with a flow being laminar, e.g. having a Reynolds number equivalent to laminar flow. The refrigerant flow may have a speed so that enough energy and vapor can be removed by the compressor 9 as ice crystals are produced. It is then preferred that the resulting refrigerant reservoir 14 has a majority of refrigerant as liquid as the refrigerant then may still be pumpable. As seen in Fig. 4 the aerodynamics of ice crystals differ significantly from that of droplets, which is visible from Fig. 4 exhibiting a change of slope for situations where the temperature of the outlet water approaches 0 degrees Celsius. The ice crystals formed in the Knudsen layer will escape the liquid much easier than droplets. If carried towards the compressor, the ice crystals or flakes may adhere to any cold surface. It may then be preferred to have a heated filter 30 to separate droplets from the vapor, but also to melt and remove ice crystals from the internal atmosphere of the evaporator 3. The droplet and ice crystal free vapor may then reach the compressor blades. As the later process adds energy cavitation on the blades will not occur, hence prolonging the lifetime and minimizing maintenance requirement of the compressor 9. The walls of the evaporator 3 and piping may be slightly heated, e.g. as proposed in EP 3 670 853 A1. For example, the compressor exhaust may be in thermal contact with the walls of the evaporator before it reaches the condenser 7. It may be preferred to have a maximum flow of liquid refrigerant passing the evaporation plate 20 as it reduces the risk of ice build-up and keep the mixture of liquid and ice crystals fully pumpable. Preferably the refrigerant in the evaporator may comprise part liquid, e.g. water, and part ice crystals, which in this disclosure may be referred to as ice slurry. Ice slurry may be desirable as the refrigerant as it has a cooling capacity much higher than pure liquid, e.g. water, therefor smaller diameter pipes are needed to satisfy the same cooling need. If the fraction of ice crystals becomes too large the fluid dynamics changes and pumping becomes difficult. Fig. 3 schematically illustrates how such fraction may be controlled. The refrigerant reservoir 14 may be a mixture of liquid, e.g. water, and ice crystals from which a pipe 11 and a pump 10 removes the mixture to an accumulation tank 80. In the accumulation tank 80 ice crystals may be separated by gravity as the density of ice is lower than water and will rise towards the top of the tank 80. Thereby a concentration gradient may be achieved with a higher ice crystal proportion towards the top. The preferred ice slurry mixture 90 can be pumped via the pipes 84 and 86 to match the cooling need and returned to the tank 80 via the piping 88. In the region where the ice crystal concentration is lowest 92, e.g. in the bottom of the accumulation tank 80, the liquid refrigerant can be pumped into the evaporator 3 again. By having this accumulation process separated from the evaporator 3 the liquid refrigerant being provided to the evaporator 3 has a substantially constant temperature. As can be seen in Fig. 5 having a fluctuating incoming temperature can be highly influential for the optimum aperture 44.

The system of Fig. 3 can be arranged so that the condensed vapor leaves the condenser through the pump 12 and piping 13 as purified refrigerant. For example, sea water or saline water may be introduced through the incoming pipe 2 into the evaporator 3. The saline concentration is increased in the reservoir 14 as water is evaporated and passed through to the compressor 9. The compressor maintains a sufficient vacuum in order for the incoming saline water to evaporate at a lower temperature than the saline water initially has coming into the evaporator 3. It may be critical for both the apparatus and the desired product that no liquids or solids can be transferred through the filter 30 onto the compressor 9 or into the condenser 7. The process may be done sequentially by pumping via the pump 10 into a next evaporator removing further vapor and increasing the saline concentration. The process may be used on other aqueous solutions as other contaminated water sources, e.g. lakes or waste water.

The system of Fig. 3 can be configured as a heat pump. The liquid refrigerant, e.g. water, may be fed through inlet pipe 2 and be evaporated in the evaporator 3. The energy for evaporation may be carried by the vapor to the compressor 9. The compressor 9 adds energy to the vapor, which results in a higher condensation temperature. By having a proper pressure ratio of the compressor 9 the refrigerant may be liquified in the condenser 7 having a suitable temperature for heating purposes. In the case of chilling the incoming refrigerant to comprise ice crystals the resulting efficiency of the heat pump is almost not dependent of the refrigerant source temperature, for example, as the enthalpy of ice formation (335 kJ/kg for water) is much higher than the corresponding heat capacity (4,2 kJ/(kg·K) for water). In Fig. 4 is show a large change in needed aperture when freezing occurs, hence the usage of a heated filter 30 may be preferred.

Fig. 4 is a graph illustrating dependence between the minimum needed flow aperture to avoid carriage of droplets and cooling capacity. On the y-axis is the needed minimum aperture to avoid carriage of droplets is shown as the cooling capacity of the cooling apparatus is changed. The dotted squares represent a cooling machine having the refrigerant input through the inlet port 2a (see e.g. Fig. 1) to 7,5 degrees Celsius and outputs refrigerant through the outlet port 11a (see e.g. Fig. 1) at 7 degrees Celsius and changing the capacity from 250 to 950 kW. The solid line represents a constant compressor flow changing the input temperature and output temperature towards 0 degrees Celsius, where ice crystals are produced having a severe impact on the needed minimum aperture to avoid carriage of droplets. The dashed line shows a constant compressor flow, the input temperature is kept constant at 7 degrees Celsius and the output temperature is changed towards 0 degrees Celsius.

Fig. 5 is a graph illustrating dependence between the minimum needed flow aperture to avoid carriage of droplets and different working environments, such as incoming refrigerant temperature and ambient temperature. The dashed line shows the effect by changing the ambient temperature which the apparatus may be thermally connected to. The solid line shows the effect in the aperture size when changing the incoming refrigerant temperature, while the output temperature is maintained at 7 degrees Celsius. For an air conditioner, such situation would typically be a start-up scenario, when the refrigerant is not yet cooled.

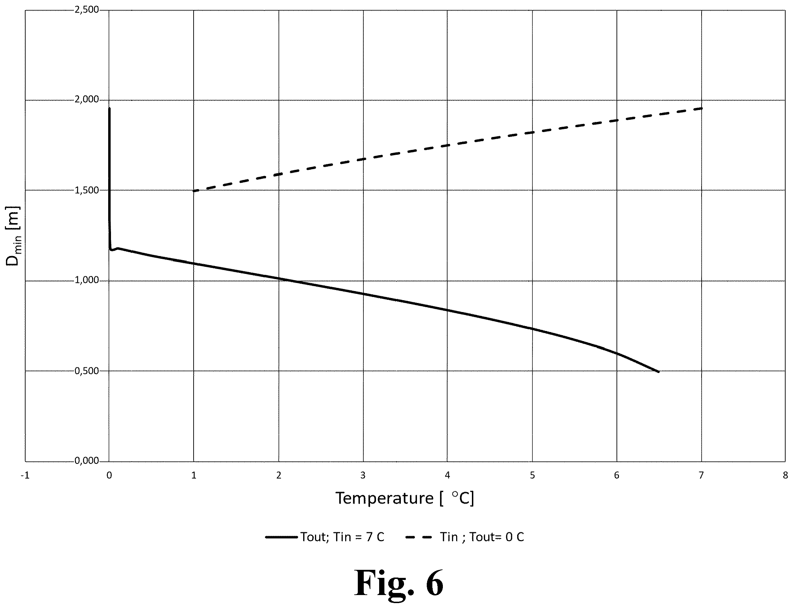

Fig. 6 is a graph illustrating dependence between the minimum needed flow aperture to avoid carriage of droplets and input and output temperature of the refrigerant. The dashed line is producing ice slurry and have the incoming refrigerant being cooled towards 1 degree Celsius. In such situation an accumulation tank 80, as described with respect to Fig. 3, may be installed. The solid line is having an incoming temperature of 7 degrees Celsius and cooling the refrigerant until ice crystals form.

The disclosure has been described with reference to a preferred embodiment. However, the scope of the invention is not limited to the illustrated embodiment, and alterations and modifications can be carried out without deviating from the scope of the invention.

Throughout the description, the use of the terms "first", "second", "third", "fourth", "primary", "secondary", "tertiary" etc. does not imply any particular order or importance, but are included to identify individual elements. Furthermore, the labelling of a first element does not imply the presence of a second element and vice versa.

LIST OF REFERENCES

| | |
|---|---|
| 1 | system |
| 2 | refrigerant line/pipe in |
| 2a | inlet port |
| 3 | evaporator |
| 3a | evaporator compartment |
| 7 | condenser |
| 9 | compressor |
| 10 | refrigerant pump |
| 11 | refrigerant line/pipe out |
| 11a | outlet port |
| 12 | second pump |
| 13 | pipe |
| 14 | refrigerant reservoir |
| 15 | pipe |
| 20 | evaporation plate |
| 25 | separation wall |
| 33 | suction port |
| 44 | aperture |
| 70 | spray condensation |
| 71 | liquified refrigerant |
| 80 | accumulation tank |
| 82 | return pump from accumulation tank |
| 84 | pump for ice slurry distribution |
| 86 | pipe for ice slurry distribution |
| 88 | refrigerant return |
| 90 | ice slurry media |
| 92 | cooled refrigerant |

**Claims**

1. An evaporator (3) comprising an evaporator compartment (3a) with a suction port (33) and an inlet port (2a), wherein the inlet port (2a) is adapted to supply a liquid refrigerant into the evaporator compartment for being partly evaporated to form vapor, and wherein the suction port (33) is adapted to be coupled to a compressor generating a low pressure at the suction port (33) such that the vapor is sucked out through the suction port (33),
   wherein the evaporator comprises an outlet port (11a) for liquid refrigerant from within the evaporator compartment to exit through the outlet port,
   wherein the evaporator comprises a flow aperture (44) between the inlet port and the suction port, and wherein the flow aperture has an opening area which is larger than an opening threshold area, and wherein the opening threshold area is such that a flow speed through the flow aperture is below an escape velocity speed needed to carry droplets or mist.

2. Evaporator according to claim 1, wherein the opening threshold area is based on the compressor flow of the compressor and the vapor pressure difference between the liquid refrigerant supplied from the inlet port and liquid refrigerant exiting through the outlet port.

3. Evaporator according to any one of the preceding claims, wherein the inlet port is adapted for an inflow feed of the liquid refrigerant such that the liquid refrigerant flows within the evaporator compartment with laminar flow, such as with a Reynolds number below 2000.

4. Evaporator according to any one of the preceding claims wherein the evaporator comprises a filter between the inlet port and the suction port, the filter dividing the evaporator compartment into a first evaporator compartment for evaporating the liquid refrigerant and a second evaporator compartment for communicating with the suction port, the filter transmitting therethrough the vapor while capturing droplets of the liquid refrigerant, and optionally wherein the filter is heated.

5. Evaporator according to claim 4, wherein the flow aperture is between the inlet port and the filter.

6. Evaporator according to any one of the preceding claims comprising an evaporation plate inside the evaporator compartment arranged such that liquid refrigerant supplied from the inlet port flows onto and along the evaporation plate, wherein the layer of liquid refrigerant on the evaporation plate has a thickness of at least a thickness needed to evaporate the liquid refrigerant defined by the Knudsen layer.

7. Evaporator according to any one of the preceding claims comprising a reservoir inside the evaporator compartment arranged such that liquid refrigerant supplied from the inlet port flows to the reservoir, and wherein the outlet port (11a) is arranged in the reservoir.

8. Evaporator according to any one of the preceding claims, wherein the liquid refrigerant is water, such as non-purified water, e.g. saline water or waste-water, and wherein the vapor sucked out through the suction port (33) is water vapor to be provided as purified water.

9. Evaporator according to any one of the preceding claims, wherein the liquid refrigerant exiting through the outlet port is a pumpable mixture of water and ice, so-called ice slurry.

10. Evaporator according to any one of the preceding claims, wherein the liquid refrigerant being supplied to the evaporator by the inlet port is at a first temperature, and wherein the liquid refrigerant exiting through the outlet port is at a second temperature, and wherein the first temperature is higher than the second temperature.

11. A system comprising the evaporator according to any one of the preceding claims and comprising a compressor (9) coupled to the suction port (33), the compressor generating a low pressure at the suction port (33) and sucking vapor from the evaporation compartment out through the suction port (33).

12. The system according to claim 11 comprising a condenser (7), wherein a pressure port of the compressor is coupled to the condenser, to provide pressurised vapor to the condenser, and wherein the vapor is condensed to liquid refrigerant in the condenser.

13. The system according to claim 12, wherein the condenser is coupled to a heat exchanger, such as to provide heat.

14. The system according to any one of claims 11-13 further comprising a cooling unit for cooling of an external medium and an outlet refrigerant line (11) coupling the outlet port of the evaporator with the cooling unit for cooling the external medium by the liquid refrigerant provided through the refrigerant line, the system further comprising an inlet refrigerant line (2) coupling the inlet port of the evaporator with the cooling unit, such as to supply liquid refrigerant from the cooling unit to the evaporator.

15. The system according to any one of claims 11-14, wherein the vapor sucked from the evaporation compartment is provided as purified water.

**Fig. 1**

**Fig. 2**

**Fig. 3**

**Fig. 4**

Fig. 5

**Fig. 6**

Europäisches
Patentamt

European
Patent Office

Office européen
des brevets

# EUROPEAN SEARCH REPORT

Application Number

EP 21 17 6915

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | EP 2 224 190 A1 (TOKYO ELECTRIC POWER CO [JP]; CHUBU ELECTRIC POWER [JP] ET AL.) 1 September 2010 (2010-09-01) * paragraphs [0009] - [0075]; figure 4 * ----- | 1-15 | INV. B01D1/00 B01D1/28 B01D1/30 B01D3/00 |
| X | US 2004/031286 A1 (BODELL MARK ROBINSON [US] ET AL) 19 February 2004 (2004-02-19) * paragraphs [0020] - [0034]; figures 1-3 * ----- | 1-15 | B01D3/10 B01D5/00 C02F1/04 F25B30/02 F25B39/02 |
| X | US 2011/163175 A1 (OPHIR AVRAHAM [IL] ET AL) 7 July 2011 (2011-07-07) * paragraphs [0032] - [0056]; figures 1-4 * ----- | 1-15 | F25C1/16 |
| X | KR 2021 0045446 A (WATERTRANSFORMER GMBH [AT]) 26 April 2021 (2021-04-26) * paragraphs [0007] - [0038]; figures 1-10 * ----- | 1-15 | |

TECHNICAL FIELDS
SEARCHED      (IPC)

B01D
C02F
F25D
F25B
F17C
F25C

The present search report has been drawn up for all claims

| Place of search | Date of completion of the search | Examiner |
|---|---|---|
| The Hague | 19 November 2021 | Thibault, Valerie |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

                    

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 21 17 6915

This annex lists the patent family members relating to the patent documents cited in the above-mentioned European search report.
The members are as contained in the European Patent Office EDP file on
The European Patent Office is in no way liable for these particulars which are merely given for the purpose of information.

19-11-2021

| Patent document cited in search report | | Publication date | Patent family member(s) | | Publication date |
|---|---|---|---|---|---|
| EP 2224190 | A1 | 01-09-2010 | CN | 101868678 A | 20-10-2010 |
| | | | DK | 2224190 T3 | 27-01-2020 |
| | | | EP | 2224190 A1 | 01-09-2010 |
| | | | ES | 2764112 T3 | 02-06-2020 |
| | | | JP | 5210604 B2 | 12-06-2013 |
| | | | JP | 2009127914 A | 11-06-2009 |
| | | | PT | 2224190 T | 21-01-2020 |
| | | | US | 2010281903 A1 | 11-11-2010 |
| | | | WO | 2009066736 A1 | 28-05-2009 |
| US 2004031286 | A1 | 19-02-2004 | NONE | | |
| US 2011163175 | A1 | 07-07-2011 | EP | 1856460 A2 | 21-11-2007 |
| | | | JP | 2008531965 A | 14-08-2008 |
| | | | US | 2009100857 A1 | 23-04-2009 |
| | | | US | 2011163175 A1 | 07-07-2011 |
| | | | WO | 2006090387 A2 | 31-08-2006 |
| KR 20210045446 | A | 26-04-2021 | AT | 521595 A1 | 15-03-2020 |
| | | | AU | 2019321863 A1 | 15-04-2021 |
| | | | BR | 112021002891 A2 | 11-05-2021 |
| | | | CL | 2021000406 A1 | 03-09-2021 |
| | | | CN | 112601594 A | 02-04-2021 |
| | | | EA | 202190549 A1 | 27-04-2021 |
| | | | EP | 3837031 A1 | 23-06-2021 |
| | | | KR | 20210045446 A | 26-04-2021 |
| | | | PE | 20210690 A1 | 12-04-2021 |
| | | | US | 2021206658 A1 | 08-07-2021 |
| | | | WO | 2020033984 A1 | 20-02-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2224190 A1

- EP 3670853 A1